# EUROPÄISCHE PATENTSCHRIFT

(11) **EP 1 868 767 B1**
(45) Veröffentlichungstag und Bekanntmachung des Hinweises auf die Patenterteilung: **30.04.2014**
(21) Anmeldenummer: 06722708.2
(22) Anmeldetag: 28.03.2006
(51) Int. Cl.: B23Q 1/58

(54) **VERFAHREN UND VORRICHTUNG ZUR POSITIONIERUNG EINES BAUELEMENTS**
METHOD AND DEVICE FOR POSITIONING A COMPONENT
PROCEDE ET DISPOSITIF DE POSITIONNEMENT D'UN COMPOSANT

(30) Priorität: 12.04.2005 DE 102005017044; 30.08.2005 DE 102005040905
(43) Veröffentlichungstag der Anmeldung: 26.12.2007
(73) Patentinhaber: KHS Corpoplast GmbH, 22145 Hamburg (DE)
(72) Erfinder: LITZENBERG, Michael, 21502 Geesthacht (DE); LINKE, Michael, 22926 Ahrensburg (DE); BAUMGARTE, Rolf, 22926 Ahrensburg (DE); VAN HAMME, Thomas, 24629 Kisdorf (DE)
(74) Vertreter: Hausfeld, Norbert
(86) Internationale Anmeldenummer: PCT/DE2006/000556
(87) Internationale Veröffentlichungsnummer: WO 2006/108380

(56) Entgegenhaltungen:
- EP-A- 0 637 499
- EP-A- 0 933 181
- EP-A- 1 574 318
- EP-A1- 1 484 160
- DE-A1- 10 212 091

## Beschreibung

Die Erfindung betrifft ein Verfahren zur Positionierung einer Reckstange einer Blasstation zur Herstellung von Behältern aus,einem thermoplastischen Material, bei dem ein Fluidantrieb das Bauelement entlang einer Führung bewegt.

Die Erfindung betrifft darüber hinaus eine Vorrichtung zur Positionierung einer Reckstange einer Blasstation zur Herstellung von Behältern aus einem thermoplastischen Material, die einen Fluidantrieb sowie eine Führung für eine Bewegung des Bauelementes aufweist.

Derartige Verfahren und Vorrichtungen werden beispielsweise bei der Blasformung von Behältern eingesetzt, bei denen ein Vorformling bei einer thermischen Konditionierung innerhalb einer Blasform von einer Reckstange gereckt und durch Blasdruckeinwirkung in den Behälter umgeformt wird. Die Reckstangen werden hierbei häufig von pneumatischen zylindern positioniert.

Bei einer Behälterformung durch Blasdruckeinwirkung werden vorformlinge aus einem thermoplastischen Material, beispielsweise vorformlinge aus PET (Polyethylenterephthalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformlinge eingeleitet wird. Der verfahrenstechnische Ablauf bei einer derartigen Expansion des Vorformlings wird in der DE-OS 43 40 291 erläutert. Die einleitend erwähnte Einleitung des unter Druck stehenden Gases umfaßt auch die Druckgaseinleitung in die sich entwickelnde Behälterblase sowie die Druckgaseinleitung in den Vorformling zu Beginn des Blasvorganges.

Der grundsätzliche Aufbau einer Blasstation zur Behälterformung wird in der DE-OS 42 12 583 beschrieben. Möglichkeiten zur Temperierung der vorformlinge werden in der DE-OS 23 52 926 erläutert.

Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden. Die Vorformlinge können aber auch mit anderen Trageinrichtungen gehandhabt werden. Die verwendung von Greifzangen zur Handhabung von Vorformlingen und die Verwendung von spreizdornen, die zur Halterung in einen Mündungsbereich des vorformlings einführbar sind, gehören ebenfalls zu den verfügbaren Konstruktionen.

Eine Handhabung von Behältern unter Verwendung von Übergaberädern wird beispielsweise in der DB-OS 199 06 438 bei einer Anordnung des Übergaberades zwischen einem Blasrad und einer Ausgabestrecke beschrieben.

Die bereits erläuterte Handhabung der Vorformlinge erfolgt zum einen bei den sogenannten Zweistufenverfahren, bei denen die vorformlinge zunächst in einem Spritzgußverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die Vorformlinge unmittelbar nach ihrer spritzgußtechnischen Herstellung und einer ausreichenden Verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Eine detaillierte Beschreibung eines Recksystems einer Blasstation mit zugeordneter Reckstange erfolgt in der

DE-OS 101 45 579. Die Reckstange ist hier als ein massiver Stab ausgebildet und die Blasluft wird der Blasform durch einen Anschlußkolben hindurch zugeführt, der einen größeren Innendurchmesser aufweist, als der Au-ßendurchmesser der Reckstange beträgt. Hierdurch wird zwischen der Reckstange und einer Innenfläche des Anschlußkolbens ein Ringspalt bereitgestellt, durch den das unter Druck stehende Gas hindurchströmen kann.

Die Verwendung einer hohlen Reckstange ist beispielsweise aus der DE-OS 28 14 952 bekannt. Ein Anschluß für das unter Druck stehende Gas erfolgt hier über ein einer Reckstangenkuppe abgewandtes Ende der rohrartig ausgebildeten Reckstange. Eine Druckgaszuführung über das Ende einer hohlen Reckstange wird darüber hinaus in der DE 34 08 740 C2 beschrieben.

Aus der DE-OS 103 25 229.0 ist es bereits bekannt, zur Positionierung einer Reckstange einen elektrischen Linearantrieb einzusetzen, der ähnlich zum Funktionsprinzip des Transrapid-Bahnsystems konstruiert ist. Derartige Linearmotoren ermöglichen eine hochgenaue Reproduzierbarkeit bei der Durchführung von Reckbewegungen, weisen jedoch ein vergleichsweise hohes Baugewicht und einen hohen Preis auf.

In der DE 102 12 091 A1 wird eine Maschine zum Formen von Hohlkörpern aus Kunststoff beschrieben, die relativ zueinander positionierbare Formhälften aufweist. Eine der Formhälften ist ortsfest angeordnet und die zweite Formhälfte ist unter verwendung eines Hydraulikzylinders sowie zweier parallel zum Hydraulikzylinder angeordneter Gewindestangen positionierbar. Zur Durchführung einer Positionierbewegung werden die Gewindestangen in eine Rotationsbewegung versetzt.

Aus der EP-A-0 637 499 ist eine Vorrichtung zur Blasformung von Behältern bekannt, bei der eine Reckstange von einem pneumatischen Zylinder positioniert wird. Der pneumatische Zylinder ist an einer Brücke angeordnet, die über eine Abnahmehülse auf einer Gewindespindel geführt ist. Die Gewindespindel wird von einem Elektromotor in eine Rotationsbewegung versetzt. Bei einer Rotation der Gewindespindel erfolgt eine Translation der Abnahmehülse und damit eine Positionierung des pneumatischen zylinders und der Reckstange.

In der EP-A-0 933 181 wird eine Vorrichtung zum Extrusionsblasformen beschrieben. Formhälften der verwendeten Blasform werden sowohl unter Verwendung eines hydraulischen Antriebes als auch unter Verwendung einer Kugelgewindespindel positioniert. Die Kugelgewindespindel kann von einem Elektromotor in eine Rotationsbewegung versetzt werden und gibt eine gegensinnige Bewegung der Blasformhälften vor.

Generell besitzen die bislang bekannt gewordenen Vorrichtungen zur Positionierung von Bauelementen jeweils eine Reihe individueller Vorteile, es können jedoch bislang noch nicht alle Anforderungen erfüllt werden, die an ein geringes Baugewicht, einen geringen Vorrichtungspreis sowie eine genaue Durchführung der Positionierungsbewegungen gestellt werden.

Aufgabe der vorliegenden Erfindung ist es, ein verfahren der einleitend genannten Art derart zu verbessern, daß eine genaue Durchführung von Positionierbewegungen bei geringem resultierenden Vorrichtungsgewicht unterstützt wird.

Diese Aufgabe wird erfindungsgemäß dadurch gelöst, daß das Bauelement zusätzlich von einem elektrischen Linearmotor positioniert wird.

Weitere Aufgabe der vorliegenden Erfindung ist es, eine Vorrichtung der einleitend genannten Art derart zu konstruieren, daß eine exakte Durchführung von Positionierbewegungen bei einem geringen Vorrichtungspreis und einem geringen Vorrichtungsgewicht ermöglicht wird.

Diese Aufgabe wird erfindungsgemäß dadurch gelöst, daß das Bauelement zusätzlich zum Fluidantrieb von einem elektrischen Linearmotor beaufschlagt ist.

Durch die Kombination eines Fluidantriebes und eines elektrischen Linearmotors ist es möglich, die Vorteile der jeweiligen Antriebssysteme miteinander zu vereinen. Fluidantriebe, insbesondere pneumatische oder hydraulische Antriebe, ermöglichen im Rahmen von Steuerungen eine sehr schnelle Durchführung von Positionierbewegungen bei hohen erzeugbaren Kräften und geringem Baugewicht. Insbesondere bei einer sehr schnellen Durchführung von Positionierbewegungen weisen die Fluidantriebe jedoch Nachteile hinsichtlich der Positioniergenauigkeit auf, da Regelungsvorgänge unter Berücksichtigung der Systemträgheiten nur eingeschränkt realisierbar sind.

Elektrische Linearmotoren weisen eine sehr hohe Positioniergenauigkeit auf, der Bauteilpreis ist jedoch ebenfalls hoch und das Verhältnis zwischen Baugewicht und erzeugbarer Stellkraft ist ungünstig. Durch die Kombination eines Fluidantriebes mit einem elektrischen Linearmotor ist es möglich, einen Linearmotor mit relativ geringer Leistung und somit auch geringem Preis und geringem Baugewicht zu verwenden und diesen lediglich zu einer Korrektur der Beschleunigungs- bzw. Bremskräfte des Fluidantriebes zu verwenden.

Bei der Durchführung einer Positionierbewegung stehen den Antriebs- oder Bremskräften des Fluidantriebes Trägheits-, Reibungs- oder sonstige durch das Bauelement verursachte Kräfte entgegen und diesen Kräften wird nunmehr zusätzlich die Positionierkraft des elektrischen Linearmotors überlagert. Aufgrund einer in den Linearmotor integrierten Positionserfassung braucht der Linearmotor somit nur eine derartig große Korrekturkraft zu erzeugen, daß die aus der Überlagerung der Kräfte des Fluidantriebes und des Bauelementes resultierende Kraft derart korrigiert wird, daß die vorgegebene Bewegung exakt durchführbar ist.

Eine exakte Positionssteuerung wird dadurch unterstützt, daß der Fluidantrieb und der Linearantrieb mechanisch starr miteinander gekoppelt werden.

Eine modulare Ausführungsform wird dadurch erreicht, daß der Fluidantrieb und der Linearantrieb hintereinander positioniert werden.

Gemäß einer anderen Ausführungsform ist auch daran gedacht, daß der Fluidantrieb und der Linearantrieb im wesentlichen parallel zueinander positioniert werden.

Eine besonders preiswerte Ausführungsform wird dadurch bereitgestellt, daß als Fluidantrieb ein pneumatischer Antrieb verwendet wird.

Eine Bereitstellung besonders hoher Stellkräfte kann dadurch erfolgen, daß als Fluidantrieb ein hydraulischer Antrieb verwendet wird.

Eine kompakte Verfahrensdurchführung wird dadurch unterstützt, daß der Fluidantrieb und der Linearantrieb auf eine gemeinsame Positionierstange einwirken.

Zu einer kompakten Konstruktion trägt es insbesondere bei, daß der Fluidantrieb und der Linearantrieb im wesentlichen koaxial auf eine Antriebsstange einwirken.

Eine sehr hohe mechanische Stabilität bei gleichzeitig guter Zugänglichkeit der verwendeten Antriebselemente wird dadurch erreicht, daß der Fluidantrieb und der Linearantrieb im wesentlichen seitlich mit einem Positionierelement gekoppelt werden.

Als besonders vorteilhaft für die Realisierung einer genauen Durchführung der Positionierungsvorgänge erweist es sich, daß der Linearantrieb mit einer integrierten Wegmessung ausgestattet wird.

Eine bevorzugte Ausführungsform wird dadurch bereitgestellt, daß eine Anwendung im Bereich einer Blasmaschine durchgeführt wird.

Insbesondere ist daran gedacht, daß eine Anwendung im Bereich eines Recksystems einer Blasmaschine durchgeführt wird.

Eine weitere Verfahrensoptimierung bei einer Durchführung von Blasvorgängen wird dadurch erreicht, daß eine Blasventilsteuerung in Abhängigkeit von einer vom Linearantrieb bereitgestellten Positionserfassung durchgeführt wird.

Eine besonders effektive Kopplung eines Fluidantriebes mit dem Linearantrieb wird dadurch erreicht, daß eine Positionsregelung des Bauelementes durch Ansteuerung des Linearantriebes durchgeführt wird.

In den Zeichnungen sind Ausführungsbeispiele der Erfindung schematisch dargestellt. Es zeigen:
- Fig. 1: Eine perspektivische Darstellung einer Blasstation zur Herstellung von Behältern aus Vorformlingen,
- Fig. 2: einen Längsschnitt durch eine Blasform, in der ein Vorformling gereckt und expandiert wird,
- Fig. 3: eine Skizze zur Veranschaulichung eines grundsätzlichen Aufbaus einer Vorrichtung zur Blasformung von Behältern,
- Fig. 4: eine modifizierte Heizstrecke mit vergrößerter Heizkapazität,
- Fig. 5: eine Seitenansicht einer Blasstation, bei der eine Reckstange von einem Reckstangenträger positioniert wird,
- Fig. 6: eine schematische Seitenansicht einer Blasstation, bei der die Reckstange durch eine Antriebsstange positioniert wird, auf die sowohl ein Pneumatikkolben als auch ein elektrischer Linearmotor einwirkt und
- Fig. 7: eine gegenüber Fig. 6 abgewandelte Ausführungsform, bei der die Reckstange von einem seitlich zur Reckstange angeordneten Pneumatikzylinder sowie einem ebenfalls seitlich zur Reckstange angeordneten Linearmotor entlang einer Schlittenführung positioniert wird.

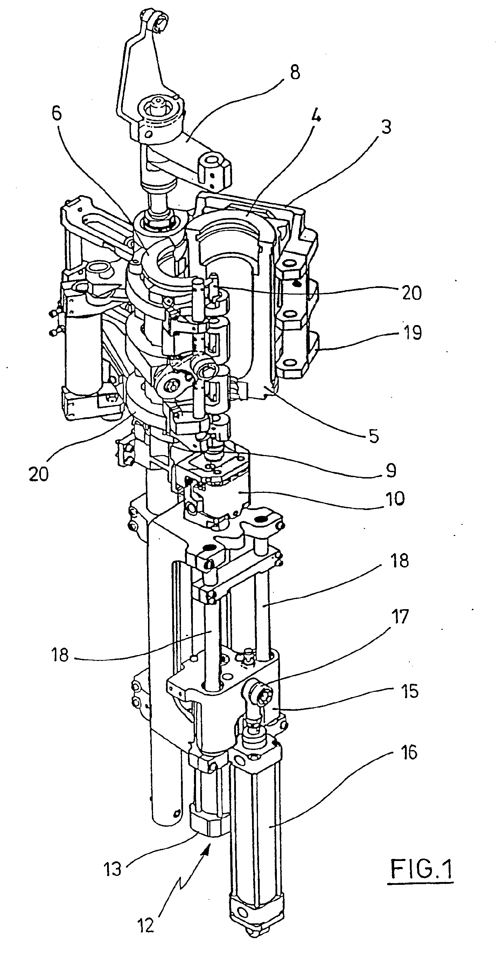

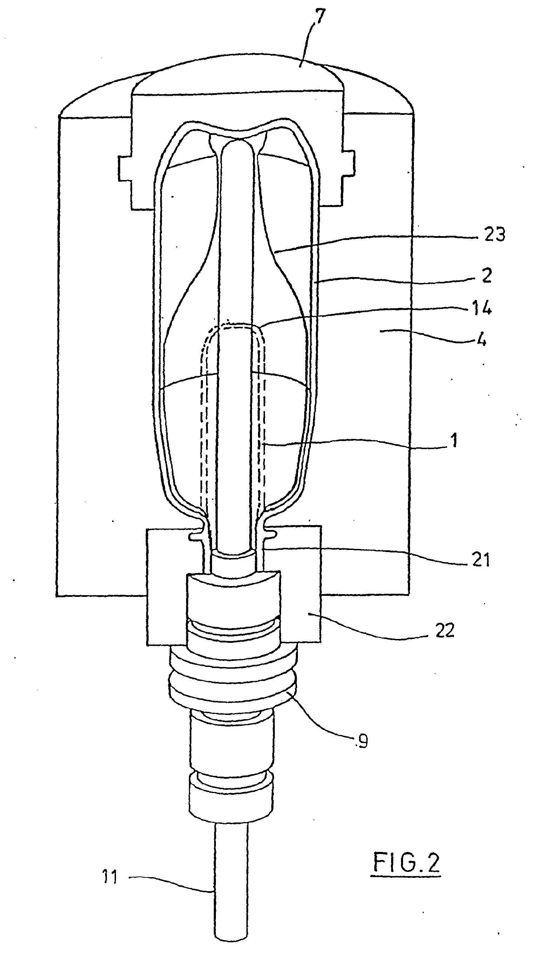

Der prinzipielle Aufbau einer Vorrichtung zur Umformung von Vorformlingen (1) in Behälter (2) ist in Fig. 1 und in Fig. 2 dargestellt.

Die Vorrichtung zur Formung des Behälters (2) besteht im wesentlichen aus einer Blasstation (3), die mit einer Blasform (4) versehen ist, in die ein Vorformling (1) einsetzbar ist. Der Vorformling (1) kann ein spritzgegossenes Teil aus Polyethylenterephthalat sein. Zur Ermöglichung eines Einsetzens des Vorformlings (1) in die Blasform (4) und zur Ermöglichung eines Herausnehmens des fertigen Behälters (2) besteht die Blasform (4) aus Formhälften (5, 6) und einem Bodenteil (7), das von einer Hubvorrichtung (8) positionierbar ist. Der Vorformling (1) kann im Bereich der Blasstation (3) von einem Transportdorn (9) gehalten sein, der gemeinsam mit dem Vorformling (1) eine Mehrzahl von Behandlungsstationen innerhalb der Vorrichtung durchläuft. Es ist aber auch möglich, den Vorformling (1) beispielsweise über Zangen oder andere Handhabungsmittel direkt in die Blasform (4) einzusetzen.

Zur Ermöglichung einer Druckluftzuleitung ist unterhalb des Transportdornes (9) ein Anschlußkolben (10) angeordnet, der dem vorformling (1) Druckluft zuführt und gleichzeitig eine Abdichtung relativ zum Transportdorn (9) vornimmt. Bei einer abgewandelten Konstruktion ist es grundsätzlich aber auch denkbar, feste Druckluftzuleitungen zu verwenden.

Eine Reckung des Vorformlings (1) erfolgt bei diesem Ausführungsbeispiel mit Hilfe einer Reckstange (11), die von einem Zylinder (12) positioniert wird. Gemäß einer anderen Ausführungsform wird eine mechanische Positionierung der Reckstange (11) über Kurvensegmente durchgeführt, die von Abgriffrollen beaufschlagt sind. Die Verwendung von Kurvensegmenten ist insbesondere dann zweckmäßig, wenn eine Mehrzahl von Blasstationen (3) auf einem rotierenden Blasrad angeordnet sind

Bei der in Fig. 1 dargestellten Ausführungsform ist das Recksystem derart ausgebildet, daß eine Tandem-Anordnung von zwei Zylindern (12) bereitgestellt ist. Von einem Primärzylinder (13) wird die Reckstange (11) zunächst vor Beginn des eigentlichen Reckvorganges bis in den Bereich eines Bodens (14) des Vorformlings (1) gefahren. Während des eigentlichen Reckvorganges wird der Primärzylinder (13) mit ausgefahrener Reckstange gemeinsam mit einem den Primärzylinder (13) tragenden Schlitten (15) von einem Sekundärzylinder (16) oder über eine Kurvensteuerung positioniert. Insbesondere ist daran gedacht, den Sekundärzylinder (16) derart kurvengesteuert einzusetzen, daß von einer Führungsrolle (17), die während der Durchführung des Reckvorganges an einer Kurvenbahn entlang gleitet, eine aktuelle Reckposition vorgegeben wird. Die Führungsrolle (17) wird vom Sekundärzylinder (16) gegen die Führungsbahn gedrückt. Der Schlitten (15) gleitet entlang von zwei Führungselementen (18).

Nach einem Schließen der im Bereich von Trägern (19, 20) angeordneten Formhälften (5, 6) erfolgt eine Verriegelung der Träger (19, 20) relativ zueinander mit Hilfe einer Verriegelungseinrichtung (20).

Zur Anpassung an unterschiedliche Formen eines Mündungsabschnittes (21) des Vorformlings (1) ist gemäß Fig. 2 die Verwendung separater Gewindeeinsätze (22) im Bereich der Blasform (4) vorgesehen.

Fig. 2 zeigt zusätzlich zum geblasenen Behälter (2) auch gestrichelt eingezeichnet den Vorformling (1) und schematisch eine sich entwickelnde Behälterblase (23).

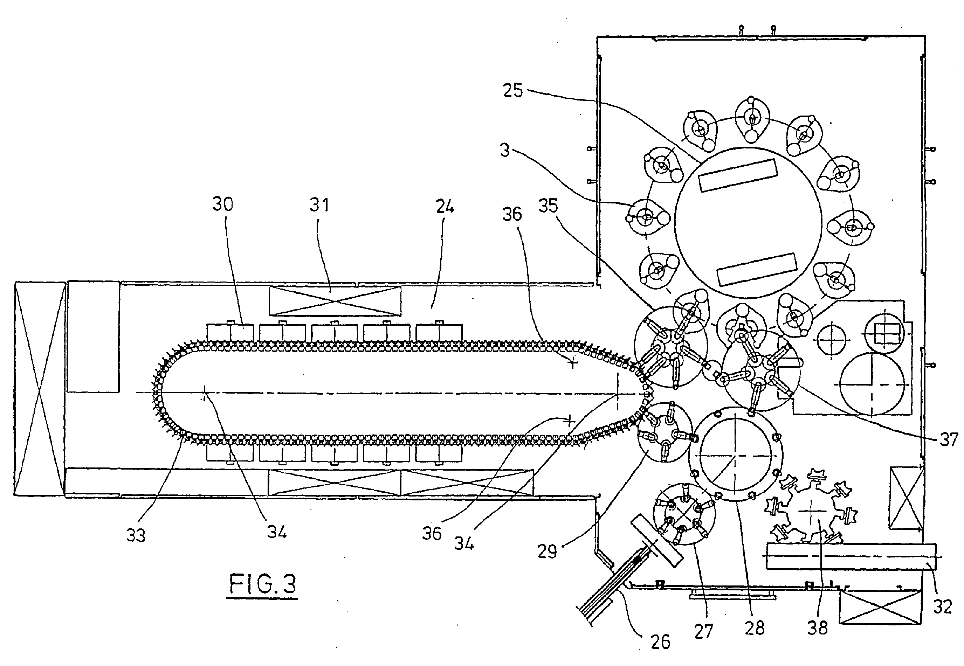

Fig. 3 zeigt den grundsätzlichen Aufbau einer Blasmaschine, die mit einer Heizstrecke (24) sowie einem rotierenden Blasrad (25) versehen ist. Ausgehend von einer Vorformlingseingabe (26) werden die Vorformlinge (1) von Übergaberädern (27, 28, 29) in den Bereich der Heizstrecke (24) transportiert. Entlang der Heizstrecke (24) sind Heizstrahler (30) sowie Gebläse (31) angeordnet, um die Vorformlinge (1) zu temperieren. Nach einer ausreichenden Temperierung der Vorformlinge (1) werden diese an das Blasrad (25) übergeben, in dessen Bereich die Blasstationen (3) angeordnet sind. Die fertig geblasenen Behälter (2) werden von weiteren Übergaberädern einer Ausgabestrecke (32) zugeführt.

Um einen Vorformling (1) derart in einen Behälter (2) umformen zu können, daß der Behälter (2) Materialeigenschaften aufweist, die eine lange Verwendungsfähigkeit von innerhalb des Behälters (2) abgefüllten Lebensmitteln, insbesondere von Getränken, gewährleisten, müssen spezielle Verfahrensschritte bei der Beheizung und Orientierung der Vorformlinge (1) eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings (1) während des Orientierungsvorganges erfolgt durch Druckluftzuführung. Die Druckluftzuführung ist in eine Vorblasphase, in der Gas, zum Beispiel Preßluft, mit einem niedrigen Druckniveau zugeführt wird und in eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, daß bei der dargestellten Ausführungsform die Heizstrecke (24) aus einer Vielzahl umlaufender Transportelemente (33) ausgebildet ist, die kettenartig aneinandergereiht und entlang von Umlenkrädern (34) geführt sind. Insbesondere ist daran gedacht, durch die kettenartige Anordnung eine im wesentlichen rechteckförmige Grundkontur aufzuspannen. Bei der dargestellten Ausführungsform werden im Bereich der dem Übergaberad (29) und einem Eingaberad (35) zugewandten Ausdehnung der Heizstrecke (24) ein einzelnes relativ groß dimensioniertes Umlenkrad (34) und im Bereich von benachbarten Umlenkungen zwei vergleichsweise kleiner dimensionierte Umlenkräder (36) verwendet. Grundsätzlich sind aber auch beliebige andere Führungen denkbar.

Zur Ermöglichung einer möglichst dichten Anordnung des Übergaberades (29) und des Eingaberades (35) relativ zueinander erweist sich die dargestellte Anordnung als besonders zweckmäßig, da im Bereich der entsprechenden Ausdehnung der Heizstrecke (24) drei Umlenkräder (34, 36) positioniert sind, und zwar jeweils die kleineren Umlenkräder (36) im Bereich der Überleitung zu den linearen Verläufen der Heizstrecke (24) und das größere Umlenkrad (34) im unmittelbaren Übergabebereich zum Übergaberad (29) und zum Eingaberad (35). Alternativ zur Verwendung von kettenartigen Transportelementen (33) ist es beispielsweise auch möglich, ein rotierendes Heizrad zu verwenden.

Nach einem fertigen Blasen der Behälter (2) werden diese von einem Entnahmerad (37) aus dem Bereich der Blasstationen (3) herausgeführt und über das Übergaberad (28) und ein Ausgaberad (38) zur Ausgabestrecke (32) transportiert.

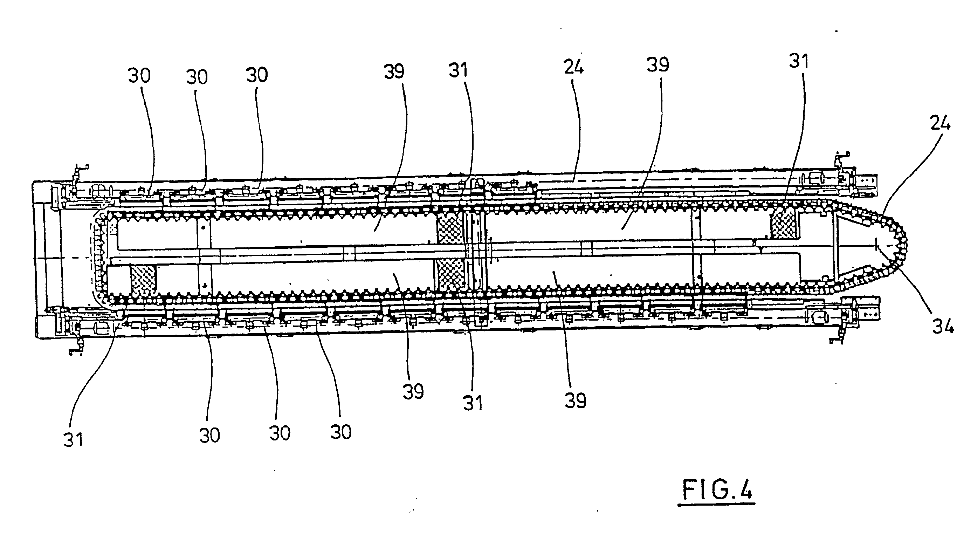

In der in Fig. 4 dargestellten modifizierten Heizstrekke (24) können durch die größere Anzahl von Heizstrahlern (30) eine größere Menge von Vorformlingen (1) je Zeiteinheit temperiert werden. Die Gebläse (31) leiten hier Kühlluft in den Bereich von Kühlluftkanälen (39) ein, die den zugeordneten Heizstrahlern (30) jeweils gegenüberliegen und über Ausströmöffnungen die Kühlluft abgeben. Durch die Anordnung der Ausströmrichtungen wird eine Strömungsrichtung für die Kühlluft im wesentlichen quer zu einer Transportrichtung der Vorformlinge (1) realisiert. Die Kühlluftkanäle (39) können im Bereich von den Heizstrahlern (30) gegenüberliegenden Oberflächen Reflektoren für die Heizstrahlung bereitstellen, ebenfalls ist es möglich, über die abgegebene Kühlluft auch eine Kühlung der Heizstrahler (30) zu realisieren.

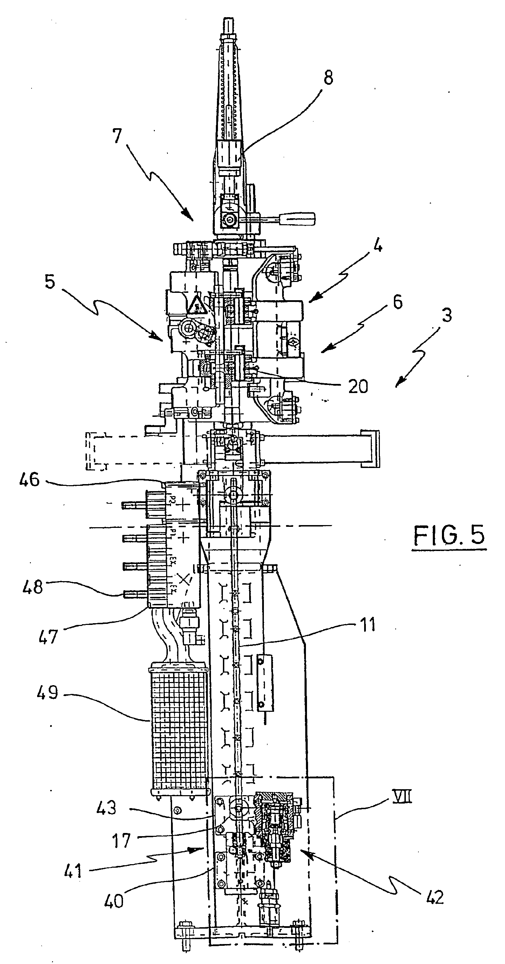

Fig. 5 zeigt eine gegenüber der Darstellung in Fig. 1 abgewandelte Darstellung der Blasstation (3) bei einer Blickrichtung von vorne. Insbesondere ist aus dieser Darstellung erkennbar, daß die Reckstange (11) von einem Reckstangenträger (41) gehaltert ist, der aus einem Trägersockel (40) und einem über ein Kupplungselement (42) mit dem Trägersockel (40) verbundenen Rollenträger (43) ausgebildet ist. Der Rollenträger (43) haltert die Führungsrolle (17), die zur Positionierung des Recksystems dient. Die Führungsrolle (17) wird entlang einer nicht dargestellten Kurvenbahn geführt. Es ist hier eine vollständige mechanische Steuerung des Reckvorganges realisiert.

Das in Fig. 5 veranschaulichte Kupplungselement (42) kann auch bei der Ausführungsform gemäß Fig. 1 zur Ermöglichung einer vollständigen mechanischen Entkopplung der Zylinder (12) voneinander bzw. von einem Tragelement für die Führungsrolle (17) eingesetzt werden.

Fig. 5 veranschaulicht einen eingerasteten Zustand des Kupplungselementes (42), in dem der Trägersockel (40) und der Rollenträger (43) miteinander durch das Kupplungselement (42) verbunden sind. Es liegt hierdurch eine starre mechanische Kopplung vor, die dazu führt, daß eine Positionierung der Führungsrolle (17) direkt und unmittelbar in eine Positionierung der Reckstange (11) umgesetzt wird. Es liegt hierdurch in jedem Bewegungszustand des Blasrades (25) eine exakt vorgegebene Positionierung der Reckstange (11) vor und die Positionierung der Reckstange (11) wird bei einer Mehrzahl von auf dem Blasrad (25) angeordneten Blasstationen (3) bei jeder Blasstation (3) exakt reproduziert. Diese exakte mechanische Vorgabe der Positionierung der Reckstange (11) trägt zu einer hohen Produktqualität sowie zu einer hohen Gleichmäßigkeit der hergestellten Behälter (2) bei.

Fig. 5 zeigt ebenfalls die Anordnung eines Pneumatikblockes (46) zur Blasdruckversorgung der Blasstation (3). Der Pneumatikblock (46) ist mit Hochdruckventilen (47) ausgestattet, die über Anschlüsse (48) an eine oder mehrere Druckversorgungen angeschlossen werden können. Nach einer Blasformung der Behälter (2) wird in eine Umgebung abzuleitende Blasluft wird über den Pneumatikblock (46) zunächst einem Schalldämpfer (49) zugeführt.

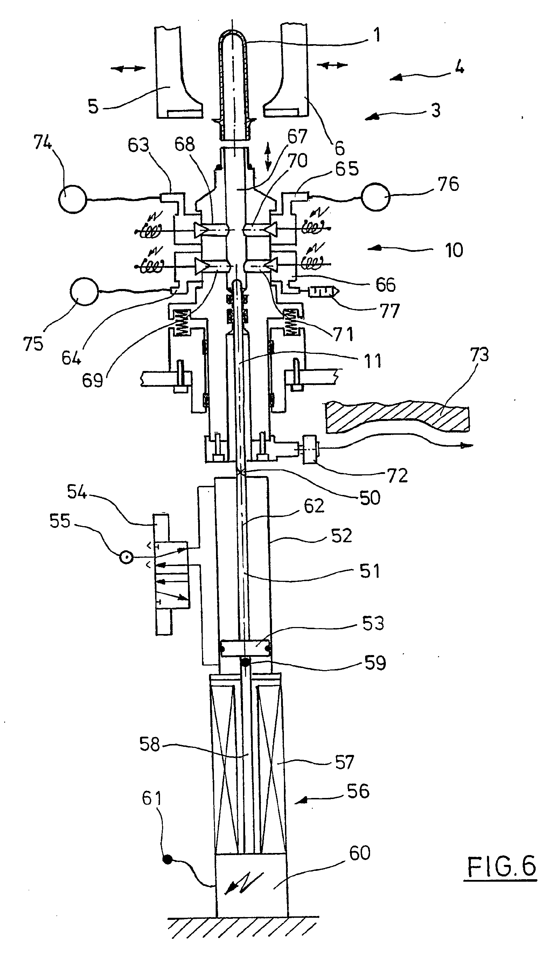

Fig. 6 zeigt eine Ausführungsform, bei der die Reckstange (11) über eine Kopplungsstelle (50) mit einer Positionierstange (51) gekoppelt ist. Grundsätzlich können die Reckstange (11) und die Positionierstange (51) auch einteilig ausgebildet werden, eine zweiteilige Ausführung ermöglicht aber einen produktabhängigen Austausch der Reckstange (11) ohne Änderungen am Reckstangenantrieb. Die Positionierstange (51) ist beim dargestellten Ausführungsbeispiel koaxial in einem Zylinder (52) geführt und von einem Kolben (53) verstellbar. Der Zylinder (52) ist über ein Ventil (54) an eine Versorgung (55) angeschlossen. Beim dargestellten Ausführungsbeispiel handelt es sich um eine pneumatische Versorgung (55) und das Ventil (54) kann als ein Magnetventil ausgebildet sein. Über das Ventil (54) ist zur Durchführung sowohl von Hub- als auch von Senkvorgängen der Reckstange (11) sowohl ein Bereich oberhalb als auch ein Bereich unterhalb des Kolbens (53) mit Druck beaufschlagbar.

Bei der in Fig. 6 dargestellten Ausführungsform erfolgt eine Blasverformung der Vorformlinge (1) in Behälter (2) mit den Mündungsabschnitten in lotrechter Richtung nach unten orientiert. Die Anordnung kann aber auch gegenüber der Darstellung in Fig. 6 um 180 ° Grad gedreht eingesetzt werden, so daß die Vorformlinge (1) mit ihren Mündungsabschnitten in lotrechter Richtung nach oben in die Behälter (2) umgeformt werden.

Die Positionierstange (51) erstreckt sich in eine der Reckstange (11) abgewandte Richtung aus dem Zylinder (52) heraus bis in den Bereich eines Linearantriebes (56). Die Positionierstange (51) ist hier als bewegliches Teil relativ zu einem Stator (57) angeordnet. Gemäß der Ausführungsform in Fig. 6 weist der Linearantrieb (56) eine eigene Antriebsstange (58) auf, die über eine Kopplungsstelle (59) mit dem Kolben (53) bzw. der Positionierstange (51) verbunden ist. Eine derartige Ausführungsform ermöglicht eine modulare Ausbildung der Antriebsvorrichtung. Grundsätzlich ist aber auch eine einteilige Ausbildung der Positionierstange (51) und der Antriebsstange (58) möglich.

Beim Ausführungsbeispiel gemäß Fig. 6 weist der Linearantrieb (56) eine Ausführung in Zylinderbauart mit zentraler Antriebsstange (58) auf. Eine Ansteuerung von Steuerspulen im Bereich des Stators (57) erfolgt über eine Steuereinheit (60), die über eine Schnittstelle (61) mit einer nicht dargestellten übergeordneten Steuerung verbunden ist. Der Linearantrieb (56) weist typischerweise eine integrierte Positionserfassung für die Antriebsstange (58) auf, so daß eine vorgegebene Position der Antriebsstange (58) in einer Längsrichtung (62) mit hoher Genauigkeit realisierbar ist.

Durch die Ausführungsform in Fig. 6 wird ein elektropneumatisches Recksystem und somit ein Recksystem mit hybridem Antrieb bereitgestellt.

Durch die in Fig. 6 dargestellte Ausführungsform wird ein separates Führungssystem für die Reckeinrichtung entbehrlich, da die Führung durch die koaxiale Ausführung des Linearantriebes (56) und der Kolben-ZylinderAnordnung (52) bereitgestellt wird. Die Antriebsleistung des pneumatischen Antriebes und des Linearantriebes werden derart aufeinander abgestimmt, daß die wesentliche Reckkraft vom Pneumatikantrieb bereitgestellt wird und daß vom Linearantrieb die Führungsaufgabe hinsichtlich der Positionierung übernommen wird. Es können hierdurch Weg-Zeit-Profile für die Durchführung des Reckvorganges exakt eingehalten werden. Die Ausführungsform in Fig. 6 kann mit einem zusätzlichen zeichnerisch nicht dargestellten externen Endanschlag kombiniert werden.

Der Linearantrieb (56) besitzt typischerweise eine Wegmessung zur Erfassung einer jeweiligen Positionierung der Antriebsstange (58). Über das in den Linearantrieb (56) integrierte Wegmeßsystem ist es möglich, die Zeitpunkte zur Einschaltung der Blasventile für die Blasstation (3) zu steuern. Es handelt sich hierbei um mindestens eines der Ventile (63, 64, 65, 66) für einen Vorblasdruck, den Hauptblasdruck, eine Blasluftrückführung sowie die Entlüftung des geblasenen Behälters (3). Es kann hierdurch eine exakte Abstimmung zwischen dem zeitlichen Verlauf des Reckens und des Blasens erreicht werden.

Alternativ zu der in Fig. 6 schematisch dargestellten Anordnung des pneumatischen Antriebes und des Linearantriebes starr mechanisch gekoppelt hintereinander sind auch weitere Variationen denkbar. Beispielsweise ist es möglich, den pneumatischen Antrieb und den Linearantrieb relativ zueinander koaxial anzuordnen. Es wird hierdurch eine nochmals erhöhte Kompaktheit der Anordnung sowie eine Gewichtsreduktion erreicht. Beispielsweise ist es möglich, den pneumatischen Antrieb innenliegend und den Linearantrieb außenliegend zu positionieren. Ebenfalls ist denkbar, den Linearantrieb innenliegend und den pneumatischen Antrieb außenliegend zu realisieren. Alternativ zu einer entsprechenden koaxialen Anordnung ist auch eine starr miteinander gekoppelte parallele Anordnung des pneumatischen Antrieb und des Linearantriebes denkbar.

Fig. 6 zeigt darüber hinaus eine Ausführung des Anschlußkolbens (10) derart, daß Blasluftventile (63, 64), ein Blasluftrückführventil (65) sowie ein Entlüftungsventil (66) direkt am Anschlußkolben (10) angeordnet und gemeinsam mit diesem positionierbar sind. Ein Innenraum (67) des Anschlußkolbens (10) ist über Verbindungskanäle (68, 69, 70, 71) mit den jeweiligen Ventilen (63, 64, 65, 66) verbunden. Eine Positionierung des Anschlußkolbens (10) kann kurvengesteuert derart erfolgen, daß eine mit dem Anschlußkolben (10) verbundene Kurvenrolle (72) entlang einer Steuerkurve (73) geführt wird. Das Blasluftventil (63) ist mit einer Niederdruckversorgung (74) verbunden, das Blasluftventil (64) ist an eine Hochdruckversorgung (75) angeschlossen. Das Blasluftrückführventil (65) ist mit einem Rückführsystem (76) verbunden und das Entlüftungsventil (66) ist an einen Schalldämpfer (77) angeschlossen.

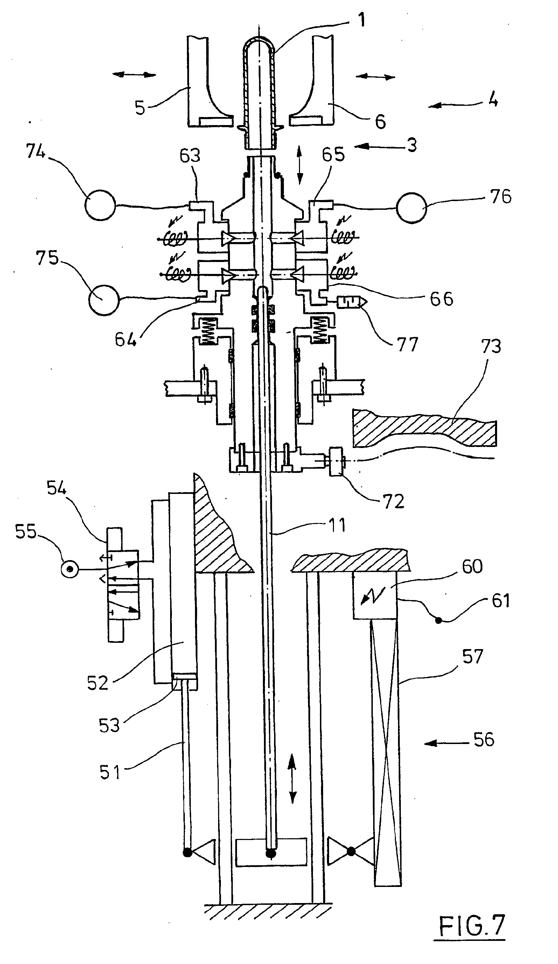

Fig. 7 zeigt eine gegenüber Fig. 6 abgewandelte Ausführungsform, bei der die Reckstange (11) mit einem Führungselement (78) gekoppelt ist, daß entlang einer Schlittenführung (79) positionierbar ist. Mit dem Führungselement (78) sind seitlich der Pneumatikantrieb sowie der Linearantrieb (56) gekoppelt.

Durch die Kombination des pneumatischen Antriebes und des Linearmotors ist es möglich, bei geringem Baugewicht und hohen bereitstellbaren Reckkräften für nahezu beliebige Größen der Behälter (2) eine programmierbare Reckbewegung bereitzustellen. Insbesondere ist es möglich, ohne Auswechslung von mechanischen Reckkurven mit hohem Gewicht über eine elektronische Bedienungssteuerung eine Anpassung an unterschiedliche herzustellende Produkte vorzunehmen.

Gemäß einer weiteren alternativen oder ergänzenden Ausführungsform ist es bei ausreichend schnellen pneumatischen Systemen bzw. allgemeinen Fluidsystemen auch möglich, die in den Linearantrieb (56) integrierte Wegmessung als Eingangsgröße für ein Regelungssystem des Fluidantriebes zu verwenden. Es ist hierdurch möglich, über die Positionserfassung des Linearantriebes die vom Fluidantrieb erzeugten Antriebskräfte zu erhöhen oder zu vermindern, so daß über den Linearantrieb lediglich eine verringerte Kräftekompensation erforderlich ist. Das erforderliche Baugewicht kann hierdurch nochmals vermindert werden.

Gemäß einer weiteren Ausführungsform ist auch daran gedacht, individuell jede Blasstation (3) mit einer eigenen Steuerung auszustatten, die örtlich verteilt den jeweiligen Blasvorgang steuert. Es werden hierdurch sehr einfache und störungsunanfällige Systeme bereitgestellt, so daß auch bei einem lokalen Ausfall einzelner Komponenten die weiteren Blasstationen funktionsfähig bleiben.

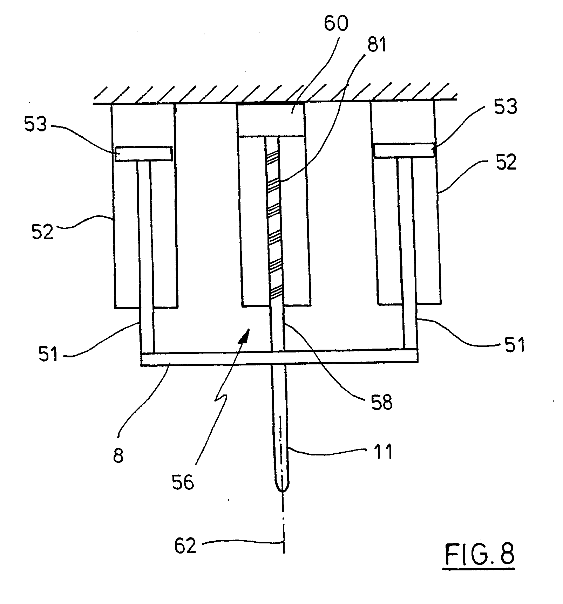

Fig. 8 zeigt eine Ausführungsform, bei der zum Antrieb der Reckstange (11) ein Linearantrieb (56) sowie mindestens zwei symmetrisch zum Linearantrieb (56) angeordnete Fluidantriebe verwendet sind. Beim dargestellten Ausführungsbeispiel werden zwei Fluidantriebe verwendet, und die Fluidantriebe sind als Pneumatikantriebe realisiert. Die Anordnung der Zylinder (52) erfolgt bezüglich der Längsachse (62) symmetrisch und somit mit einem gleichen Abstand. Die Positionierstangen (51) der Zylinder (52) sind über eine Kopplung (80) mit der Reckstange (11) verbunden. Bei einer im wesentlichen gleichen Dimensionierung der Zylinder (52) und durch die bezüglich der Längsachse (62) äquidistante Anordnung der zylinder (52) werden in die Reckstange (11) einwirkende Querkräfte vermieden.

Fig. 8 zeigt schematisch auch ein Wegmeßsystem (81) des Linearantriebes (56), das typischerweise aus Positionsmarkierungen sowie einem zugeordneten Sensor ausgebildet ist. Durch die in Fig. 8 dargestellte parallele Anordnung von zwei pneumatischen Zylindern (52) und einem bezüglich der Zylinder (52) mittig angeordneten Linearantrieb (56) kann eine sehr geringe Bauhöhe der Antriebseinheit für die Reckstange (11) realisiert werden.

Fig. 8 zeigt eine Anordnung des Recksystems für eine Blasverformung der Vorformlinge (1) in die Behälter (2) mit in lotrechter Richtung nach oben orientierten Mündungsabschnitten (21). Ebenfalls wie bei den Ausführungsformen in Fig. 6 und Fig. 7 kann aber auch das System gemäß Fig. 8 in anderen Einbaupositionen verwendet werden.

## Patentansprüche

1. Verfahren zur Positionierung einer Reckstange einer Blasstation zur Herstellung von Behältern aus einem thermoplastischen Material, bei dem ein Fluidantrieb das Reckstange entlang einer Führung bewegt, **dadurch gekennzeichnet, dass** das Reckstange zusätzlich von einem elektrischen Linearmotor (56) positioniert wird.

2. Verfahren nach Anspruch 1, **dadurch gekennzeichnet, dass** der Fluidantrieb und der Linearmotor (56) mechanisch starr miteinander gekoppelt werden.

3. Verfahren nach einem der Ansprüche 1 oder 2, **dadurch gekennzeichnet, dass** der Fluidantrieb und der Linearmotor (56) hintereinander positioniert werden.

4. Verfahren nach Anspruch 1 oder 2, **dadurch gekennzeichnet, dass** der Fluidantrieb und der Linearmotor (56) im Wesentlichen parallel zueinander positioniert werden.

5. Verfahren nach einem der Ansprüche 1 bis 4, **dadurch gekennzeichnet, dass** als Fluidantrieb ein pneumatischer Antrieb verwendet wird.

6. Verfahren nach einem der Ansprüche 1 bis 4, **dadurch gekennzeichnet, dass** als Fluidantrieb ein hydraulischer Antrieb verwendet wird.

7. Verfahren nach einem der Ansprüche 1 bis 6, **dadurch gekennzeichnet, dass** der Fluidantrieb und der Linearmotor (56) auf eine gemeinsame Positionierstange (51) einwirken.

8. Verfahren nach einem der Ansprüche 1 bis 7, **dadurch gekennzeichnet, dass** der Fluidantrieb und der Linearmotor im Wesentlichen koaxial auf eine Antriebsstange einwirken.

9. Verfahren nach einem der Ansprüche 1 bis 7, **dadurch gekennzeichnet, dass** der Fluidantrieb und der Linearmotor (56) im wesentlichen seitlich mit einem Positionierelement gekoppelt werden.

10. Verfahren nach einem der Ansprüche 1 bis 9, **dadurch gekennzeichnet, dass** der Linearmotor (56) mit einer integrierten Wegmessung ausgestattet wird.

11. Verfahren nach einem der Ansprüche 1 bis 10, **dadurch gekennzeichnet, dass** eine Blasventilsteuerung in Abhängigkeit einer vom Linearmotor (56) bereitgestellten Positionserfassung durchgeführt wird.

12. Verfahren nach einem der Ansprüche 1 bis 11, **dadurch gekennzeichnet, dass** eine Positionsregelung der Reckstange durch Ansteuerung des Linearmotors (56) durchgeführt wird.

13. Vorrichtung zur Positionierung einer Reckstange einer Blasstation zur Herstellung von Behältern aus einem thermoplastischen Material, die einen Fluidantrieb sowie eine Führung für eine Bewegung der Reckstange aufweist, **dadurch gekennzeichnet, dass** das Reckstange zusätzlich zum Fluidantrieb von einem elektrischen Linearmotor (56) beaufschlagt ist.

14. Vorrichtung nach Anspruch 13, **dadurch gekennzeichnet, dass** der Fluidantrieb und der Linearmotor (56) starr miteinander gekoppelt sind.

15. Vorrichtung nach Anspruch 13 oder 14, **dadurch gekennzeichnet, dass** der Fluidantrieb und der Linearmotor (56) in einer Positionierrichtung hintereinander angeordnet sind.

16. Vorrichtung nach Anspruch 13 oder 14, **dadurch gekennzeichnet, dass** der Fluidantrieb und der Linearmotor (56) relativ zueinander parallel angeordnet sind.

17. Vorrichtung nach einem der Ansprüche 13 bis 16, **dadurch gekennzeichnet, dass** der Fluidantrieb pneumatisch ausgebildet ist.

18. Vorrichtung nach einem der Ansprüche 13 bis 16, **dadurch gekennzeichnet, dass** der Fluidantrieb hydraulisch ausgebildet ist.

19. Vorrichtung nach einem der Ansprüche 13 bis 18, **dadurch gekennzeichnet, dass** der Fluidantrieb und der Linearmotor (56) eine gemeinsame Positionierstange (51) aufweisen.

20. Vorrichtung nach einem der Ansprüche 13 bis 19, **dadurch gekennzeichnet, dass** der Fluidantrieb und der Linearmotor (56) mit einer im Wesentlichen koaxial angeordneten Positionierstange (51) gekoppelt sind.

21. Vorrichtung nach einem der Ansprüche 13 bis 19, **dadurch gekennzeichnet, dass** der Fluidantrieb und der Linearmotor (56) seitlich zu einem Führungselement (78) der Reckstange (11) angeordnet sind.

22. Vorrichtung nach einem der Ansprüche 13 bis 21, **dadurch gekennzeichnet, dass** der Linearmotor (56) eine integrierte Wegmessung für die Antriebsstange (58) aufweist.

23. Vorrichtung nach einem der Ansprüche 13 bis 22, **dadurch gekennzeichnet, dass** eine Ventilsteuerung einer Blasstation (3) der Blasmaschine mit der Positionserfassung des Linearmotor (56) gekoppelt ist.

24. Vorrichtung nach einem der Ansprüche 13 bis 23, **dadurch gekennzeichnet, dass** der Linearmotor (56) als Verlängerung der Reckstange (11) angeordnet ist und dass zusätzlich mindestens zwei symmetrisch zum Linearmotor (56) angeordnete Fluidantriebe auf die Reckstange (11) einwirken.

25. Vorrichtung nach Anspruch 24, **dadurch gekennzeichnet, dass** die Fluidantriebe im wesentlichen neben dem Linearmotor (56) und äquidistant zu einer Längsachse (62) der Reckstange 11) angeordnet sind.

26. Vorrichtung nach Anspruch 24, **dadurch gekennzeichnet, dass** der Linearmotor (56) und die mindestens zwei Fluidantriebe starr miteinander und mit der Reckstange (11) gekoppelt sind.

## Claims

1. A method for positioning a stretch forming bar of a blowing station for the production of containers from a thermoplastic material, wherein a fluid drive moves the stretch forming bar along a guide,
**characterised in that**
- the stretch forming bar is additionally positioned by an electric linear motor (56).

2. The method according to Claim 1, **characterised in that** the fluid drive and the linear motor (56) are mechanically coupled to each other in a rigid manner.

3. The method according to Claim 1 or 2, **characterised in that** the fluid drive and the linear motor (56) are positioned one after the other.

4. The method according to Claim 1 or 2, **characterised in that** the fluid drive and the linear motor (56) are positioned essentially in parallel to each other.

5. The method according to any one of Claims 1 to 4, **characterised in that** a pneumatic drive is used as fluid drive.

6. The method according to any one of Claims 1 to 4, **characterised in that** a hydraulic drive is used as fluid drive.

7. The method according to any one of Claims 1 to 6, **characterised in that** the fluid drive and the linear motor (56) are acting on a common positioning rod (51).

8. The method according to any one of Claims 1 to 7, **characterised in that** the fluid drive and the linear motor are acting on a driving rod in an essentially coaxial manner.

9. The method according to any one of Claims 1 to 7, **characterised in that** the fluid drive and the linear motor (56) are coupled to a positioning element in an essentially lateral manner.

10. The method according to any one of Claims 1 to 9, **characterised in that** the linear motor (56) is equipped with an integrated distance measurement.

11. The method according to any one of Claims 1 to 10, **characterised in that** a blow valve control is achieved subject to a position detection provided by the linear motor (56).

12. The method according to any one of Claims 1 to 11, **characterised in that** a positioning control of the stretch forming bar is achieved by activating the linear motor (56).

13. A device for positioning a stretch forming bar of a blowing station for the production of containers from a thermoplastic material, which comprises a fluid drive as well as a guide for a movement of the stretch forming bar, **characterised in that** the stretch forming bar is charged by an electric linear motor (56) in addition to the fluid drive.

14. The device according to Claim 13, **characterised in that** the fluid drive and the linear motor (56) are coupled to each other in a rigid manner.

15. The device according to Claim 13 or 14, **characterised in that** the fluid drive and the linear motor (56) are arranged one after the other in a positioning direction.

16. The device according to Claim 13 or 14, **characterised in that** the fluid drive and the linear motor (56) are arranged in parallel in relation to each other.

17. The device according to any one of Claims 13 to 16, **characterised in that** the fluid drive is designed pneumatically.

18. The device according to any one of Claims 13 to 16, **characterised in that** the fluid drive is designed hydraulically.

19. The device according to any one of Claims 13 to 18, **characterised in that** the fluid drive and the linear motor (56) comprise a common positioning rod (51).

20. The device according to any one of Claims 13 to 19, **characterised in that** the fluid drive and the linear motor (56) are coupled to a positioning rod (51) that is arranged in an essentially coaxial manner.

21. The device according to any one of Claims 13 to 19, **characterised in that** the fluid drive and the linear motor (56) are arranged laterally in relation to a guide element (78) of the stretch forming bar (11).

22. The device according to any one of Claims 13 to 21, **characterised in that** the linear motor (56) comprises an integrated distance measurement for the driving rod (58).

23. The device according to any one of Claims 13 to 22, **characterised in that** a valve control of a blowing station (3) of the blow moulding machine is coupled to the position detection of the linear motor (56).

24. The device according to any one of Claims 13 to 23, **characterised in that** the linear motor (56) is arranged as an extension of the stretch forming bar (11) and that, in addition, at least two fluid drives that are arranged symmetrically in relation to the linear motor (56) are acting on the stretch forming bar (11).

25. The device according to Claim 24, **characterised in that** the fluid drives are, in essence, arranged adjacent to the linear motor (56) and equidistant to a longitudinal axis (62) of the stretch forming bar (11).

26. The device according to Claim 24, **characterised in that** the linear motor (56) and the at least two fluid drives are coupled to each other and to the stretch forming bar (11) in a rigid manner.

## Revendications

1. Procédé de positionnement d'une barre d'étirage d'une station de soufflage pour la fabrication de récipients en un matériau thermoplastique, dans le cadre duquel une commande à fluide déplace la barre d'étirage le long d'un guide, **caractérisé en ce que** la barre d'étirage est en outre positionnée par un moteur linéaire électrique (56).

2. Procédé selon la revendication 1, **caractérisé en ce que** la commande à fluide et le moteur linéaire (56) sont couplés par un accouplement mécanique rigide.

3. Procédé selon l'une des revendications 1 ou 2, **caractérisé en ce que** la commande à fluide et le moteur linéaire (56) sont positionnés l'un derrière l'autre.

4. Procédé selon la revendication 1 ou 2, **caractérisé en ce que** la commande à fluide et le moteur linéaire (56) sont positionnés de façon essentiellement parallèle.

5. Procédé selon l'une des revendications 1 à 4, **caractérisé en ce que** la commande à fluide utilisée est une commande pneumatique.

6. Procédé selon l'une des revendications 1 à 4, **caractérisé en ce que** la commande à fluide utilisée est une commande hydraulique.

7. Procédé selon l'une des revendications 1 à 6, **caractérisé en ce que** la commande à fluide et le moteur linéaire (56) agissent sur une barre de positionnement commune (51).

8. Procédé selon l'une des revendications 1 à 7, **caractérisé en ce que** la commande à fluide et le moteur linéaire agissent de façon essentiellement coaxiale sur une barre d'entraînement.

9. Procédé selon l'une des revendications 1 à 7, **caractérisé en ce que** la commande à fluide et le moteur linéaire (56) sont couplés de façon essentiellement latérale avec un élément de positionnement.

10. Procédé selon l'une des revendications 1 à 9, **caractérisé en ce que** le moteur linéaire (56) est doté d'un système intégré de mesure de déplacement.

11. Procédé selon l'une des revendications 1 à 10, **caractérisé en ce qu'**une commande de soupape de soufflage a lieu en fonction de la position saisie par le moteur linéaire (56).

12. Procédé selon l'une des revendications 1 à 11, **caractérisé en ce qu'**un réglage de position de la barre d'étirage a lieu par commande du moteur linéaire (56).

13. Dispositif de positionnement d'une barre d'étirage d'une station de soufflage pour la fabrication de récipients en un matériau thermoplastique, qui présente une commande à fluide ainsi qu'un guide pour le déplacement de la barre d'étirage, **caractérisé en ce que**, la barre d'étirage est actionnée, outre par la commande à fluide, également par un moteur linéaire électrique (56).

14. Dispositif selon la revendication 13, **caractérisé en ce que** la commande à fluide et le moteur linéaire (56) sont couplés par un accouplement rigide.

15. Dispositif selon la revendication 13 ou 14, **caractérisé en ce que** la commande à fluide et le moteur linéaire (56) sont agencés en un sens de positionnement l'un derrière l'autre.

16. Dispositif selon la revendication 13 ou 14, **caractérisé en ce que** la commande à fluide et le moteur linéaire (56) sont agencés parallèlement l'un par rapport à l'autre.

17. Dispositif selon l'une des revendications 13 à 16, **caractérisé en ce que** la commande à fluide est réalisée sous forme de commande pneumatique.

18. Dispositif selon l'une des revendications 13 à 16, **caractérisé en ce que** la commande à fluide est réalisée sous forme de commande hydraulique.

19. Procédé selon l'une des revendications 13 à 18, **caractérisé en ce que** la commande à fluide et le moteur linéaire (56) présentent une barre de positionnement commune (51).

20. Procédé selon l'une des revendications 13 à 19, **caractérisé en ce que** la commande à fluide et le moteur linéaire (56) sont couplés par une barre de positionnement (51) d'agencement essentiellement coaxial.

21. Dispositif selon l'une des revendications 13 à 19, **caractérisé en ce que** la commande à fluide et le moteur linéaire (56) sont agencés latéralement par rapport à un élément de guidage (78) de la barre d'étirage (11).

22. Dispositif selon l'une des revendications 13 à 21, **caractérisé en ce que** le moteur linéaire (56) présente un système intégré de mesure de déplacement pour la barre d'entraînement (58).

23. Dispositif selon l'une des revendications 13 à 22, **caractérisé en ce qu'**une commande de soupape d'une station de soufflage (3) de la machine de moulage par soufflage est couplée au système de saisie de position du moteur linéaire (56).

24. Dispositif selon l'une des revendications 13 à 23, **caractérisé en ce que** le moteur linéaire (56) est disposé comme prolongement de la barre d'étirage (11) et qu'au moins deux commandes à fluide additionnelles placées symétriquement par rapport au moteur linéaire (56) agissent sur la barre d'étirage (11).

25. Dispositif selon la revendication 24, **caractérisé en ce que** les commandes à fluide sont essentiellement disposées à côté du moteur linéaire (56) et à équidistance d'un axe longitudinal (62) de la barre d'étirage (11).

26. Dispositif selon la revendication 24, **caractérisé en ce que** le moteur linéaire (56) et les deux commandes à fluide au moins sont couplés de façon rigide entre eux et à la avec l'autre et à la barre d'étirage (11).
